# EUROPÄISCHE PATENTANMELDUNG

(11) **EP 2 030 808 A2**
(43) Veröffentlichungstag der Anmeldung: **04.03.2009**
(21) Anmeldenummer: 08014465.2
(22) Anmeldetag: 13.08.2008
(51) Int. Cl.: B60B 33/00

(54) **Rolleneinheit zur Anbringung an einer Kiste**

(30) Priorität: 03.09.2007 DE 202007012320 U
(71) Anmelder: Degenhardt, Florian, 33803 Steinhagen (DE)
(72) Erfinder: Degenhardt, Florian, 33803 Steinhagen (DE)
(74) Vertreter: Wiebusch, Manfred

(57) **Zusammenfassung**

Die Erfindung betrifft eine Rolleneinheit (10) zur Anbringung an einer Kiste (110), inbesondere an einer Spielbox. Die Rolleneinheit (10) umfasst einen Lagerbock (14), in welchem eine Rolle (12) drehbar gehalten wird und der einen etwa L-förmigen Querschnitt mit zwei Schenkeln (16,18) aufweist, von denen ein erster Schenkel (16) plattenförmig ausgebildet ist und zu der der Rolle (12) abgewandten Seite des Lagerbocks (14) weist und der zweite Schenkel (18) ein Lager (20) zur Aufnahme der Drehachse (22) der Rolle (12) umfasst, welche Drehachse (22) sich senkrecht zur Erstreckungsrichtung des zweiten Schenkels (18) durch diesen hindurch erstreckt und im Lager (20) axial verschiebbar einliegt, und welches Lager (20) ein Federelement (32) umfasst, das die Drehachse (22) in Richtung der der Rolle (12) abgewandten Seite des zweiten Schenkels (18) vorspannt.

## Beschreibung

Die vorliegende Erfindung betrifft eine Rolleneinheit zur Anbringung an einer Kiste, insbesondere an einer Spielbox.

Kisten finden in vielfältiger Form als Aufbewahrungsbehälter Verwendung. Sie sind beispielsweise als Spielboxen bekannt, die zum einen Spielelemente aufnehmen können, zum anderen jedoch eigenständig oder in Kombination mit weiteren Elementen eine Spielfunktion haben können. Eine derartige Spielbox ist beispielsweise aus dem Gebrauchsmuster 20 2006 013 648 des Anmelders bekannt.

Der Transport einer solchen Kiste wird durch Rolleneinheiten erleichtert, die seitlich im Bereich des Kistenbodens angebracht sein können. Üblicherweise handelt es sich dabei um einfache Rollen auf Steckachsen, die in Löcher in den Seitenwänden der Kiste eingesteckt werden. Da es in manchen Situationen erwünscht ist, die Rollen zu entfernen, um einen sicheren Stand der Kiste zu gewährleisten oder mehrere Kisten aufeinander zu stapeln, können die Rolleneinheiten abnehmbar angebracht sein. Es existiert bisher jedoch kein Rollensystem, das einerseits eine sichere Befestigung der Rolle an der Kiste gewährleistet, andererseits jedoch leicht und ohne Werkzeug abnehmbar ist. Dieses Problem stellt sich insbesondere bei Spielboxen, da auch Kinder in der Lage sein sollen, die Rollen nach Bedarf anzubringen oder zu entfernen.

Aufgabe der vorliegenden Erfindung ist es daher, eine Rolleneinheit zur Anbringung an einer Kiste zu schaffen, durch welche eine Rolle sicher an der Kiste befestigt wird, ohne daß sie sich selbsttätig während der Bewegung der Kiste lösen kann, und welche andererseits mit geringem Kraftaufwand und ohne Schwierigkeiten demontierbar ist.

Diese Aufgabe wird erfindungsgemäß durch eine Rolleneinheit mit den Merkmalen des Anspruchs 1 gelöst.

Die erfindungsgemäße Rolleneinheit umfaßt einen Lagerbock, in welchem die Rolle drehbar gehalten wird. Der Lagerbock weist einen etwa L-förmigen Querschnitt mit zwei Schenkeln auf, von denen ein erster Schenkel plattenförmig ausgebildet ist und zu der Seite des Lagerbocks weist, die der Rolle abgewandt ist. Der zweite Schenkel umfaßt ein Lager zur Aufnahme der Drehachse, welche sich senkrecht zur Erstreckungsrichtung des zweiten Schenkels durch diesen hindurch erstreckt. Innerhalb des Lagers liegt die Drehachse axial verschiebbar ein und wird durch ein Federelement in der Richtung vorgespannt, die der Rolle abgewandt ist.

Die Rolleneinheit mitsamt dem Lagerbock und der Rolle läßt sich einfach an einer Unterkante der Kiste befestigen, indem der Rand des Kistenbodens auf den plattenförmigen ersten Schenkel des Lagerbocks aufgelegt wird, so daß der zweite Schenkel an der angrenzenden Seitenwand der Kiste anliegt. In der Montageposition kann dann das freie Ende der Drehachse in einer Ausnehmung in der Seitenwand aufgenommen werden. Zur Erleichterung der Montage kann die Rolle mitsamt der Drehachse gegen die Spannung des Federelements vom zweiten Schenkel in axialer Richtung abgezogen werden, so daß das Ende der Drehachse in den Schenkel eingezogen wird. Ist der Lagerbock in Position, kann das Ende der Drehachse in die Ausnehmung in der Seitenwand hineingleiten.

Vorzugsweise ragt auf dem plattenförmigen ersten Schenkel mindestens ein Zapfen auf. Dieser Zapfen, der in der Montageposition in einer entsprechenden Ausnehmung im Kistenboden einliegt, bietet dem Lagerbock ausreichenden Seitenhalt.

Weitere Ansprüche betreffen eine Kiste, insbesondere ein Spielbox, die mit erfindungsgemäßen Rolleneinheiten ausgerüstet ist, welche im Bereich der Außenkanten des Kistenbodens angebracht sind, wobei die Seitenwände der Kisten mit Ausnehmungen zur Aufnahme der Enden der Drehachsen versehen sind.

In einer bevorzugten Ausführungsform einer solchen Kiste ist der Kistenboden mit Ausnehmungen zur Aufnahme der Zapfen versehen.

Im folgenden soll ein bevorzugtes Ausführungsbeispiel der Erfindung anhand der Zeichnung näher erläutert werden.
- Figur 1: ist eine perspektivische Ansicht einer erfindungsgemäßen Rolleneinheit zur Anbringung an einer Kiste;

- Figur 2: zeigt die Rolleneinheit aus Figur 1 in einer Seitenansicht;
- Figur 3: ist eine Explosionsdarstellung der Rolleneinheit aus Figur 1;
- Figur 4 bis 6: sind schematische Darstellungen zur Erläuterung der Montage der erfindungsgemäßen Rolleneinheit an einer Spielbox; und
- Figur 7 bis 10: zeigen eine mit Rolleneinheiten versehene Spielbox.

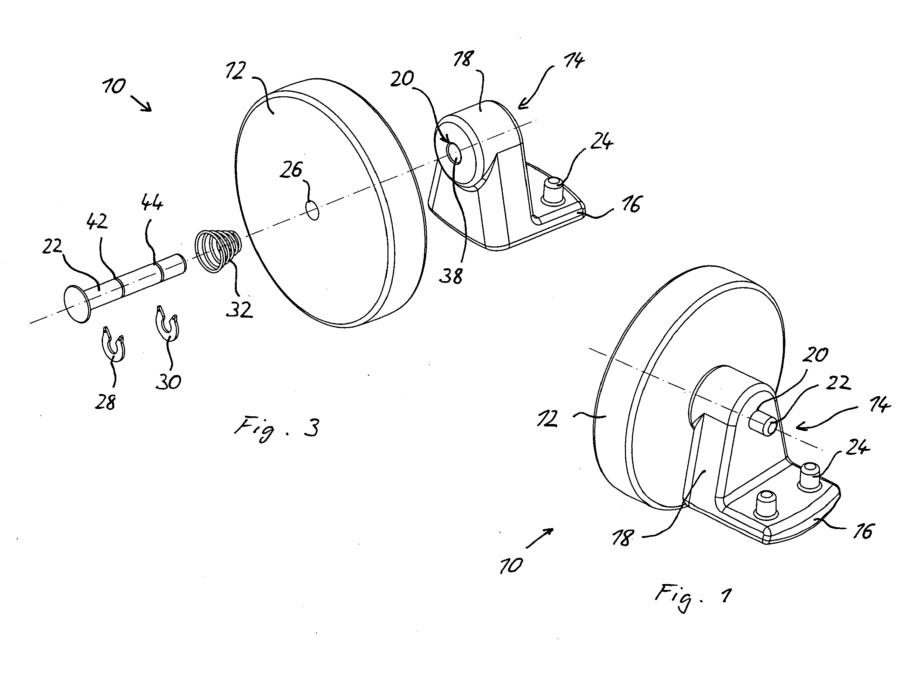

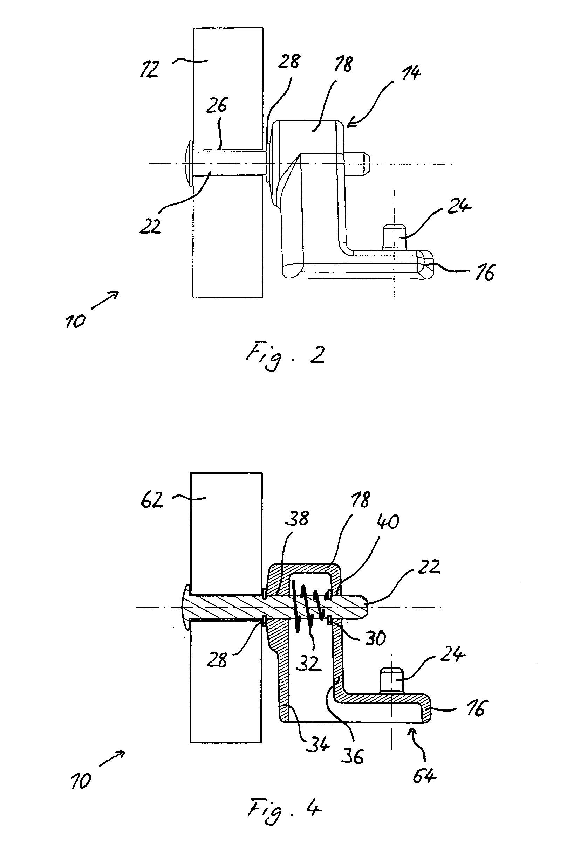

Fig. 1 zeigt eine Rolleneinheit 10, die eine Rolle 12 und einen Lagerbock 14 zur Lagerung der Rolle 12 umfaßt. Der Lagerbock 14 hat einen etwa L-förmigen Querschnitt mit zwei Schenkeln 16, 18, von denen ein erster Schenkel 16 plattenförmig ausgebildet ist und zu der Seite des Lagerbocks 14 weist, die der Rolle 12 abgewandt ist, während der dazu senkrechte zweite Schenkel 18 eine größere Dicke aufweist und in seinem Endbereich ein Lager 20 umfaßt, in welchem die Drehachse 22 der Rolle 12 einliegt. Die Drehachse 22 erstreckt sich parallel zur Ebene des plattenförmigen ersten Schenkels 16 und senkrecht zu der Erstreckungsrichtung des zweiten Schenkels 18, in dessen Lager 20 sie einliegt. An der flachen Innenseite des zweiten Schenkels 18, die der Rolle 12 abgewandt ist, ragt ein freies Ende der Drehachse 22 heraus, während die Rolle 12 selbst an der gegenüberliegenden Seite dieses Schenkels 18 flach anliegt. Diese Anordnung ist auch in der Seitenansicht in Fig. 2 deutlich zu erkennen.

Auf der Oberseite des plattenförmigen ersten Schenkels 16 ragen zwei Zapfen 24 auf, die mit dem Lagerbock 14 einstückig ausgeformt sind.

Wie in der Explosionsdarstellung in Fig. 3 zu sehen ist, ist die Drehachse 22 als Steckachse aus Metall ausgebildet, die in ein entsprechendes Loch 26 in der Mittelachse der Rolle 12 einsteckbar ist. Ferner umfaßt die Rolleneinheit 10 Mittel zur Anordnung und Befestigung der Drehachse 22, die zwei Sprengringe 28,30 und eine kegelstumpfförmig zulaufende Schraubenfeder 32 umfassen. Die Anordnung dieser Elemente im montierten Zustand ist in dem schematischen Schnitt in Fig. 4 gezeigt.

In Fig. 4 ist zu erkennen, dass der Lagerbock 14 hohl ausgebildet ist. Insbesondere umfaßt der aufragende zweite Schenkel 18 zwei parallele Außenwände 34,36, die jeweils mit einem Loch 38,40 versehen sind. Die beiden Löcher 38,40 sind derart auf einer Achse angeordnet, dass sich die Drehachse 22 durchstecken läßt. Die beiden Löcher 38,40 im zweiten Schenkel 18 bilden somit das Lager 20 zur Aufnahme der Drehachse 22.

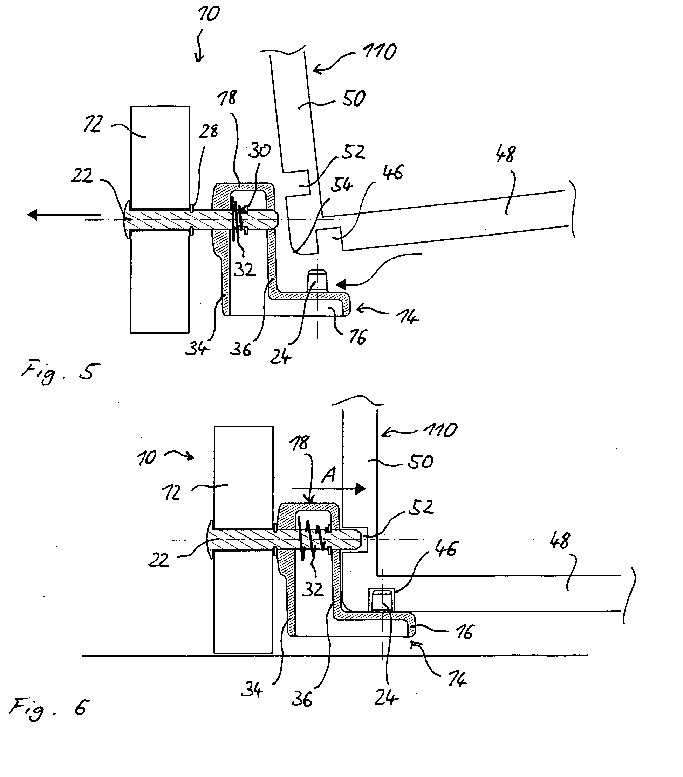

Wie in Fig. 3 zu sehen ist, ist die Drehachse 22 mit zwei kreisförmig umlaufenden, axial voneinander beabstandeten Nuten 42,44 versehen. Diese Nuten 42,44 dienen zur Aufnahme der Sprengringe 28,30, die sich durch geringfügiges Spreizen auf den Umfang der Drehachse 22 aufstecken lassen und durch ihre Federkraft sicher in den Nuten gehalten werden. Gemäß Fig. 4 liegt in der montierten Stellung der erste der beiden Sprengringe 28 zwischen der der Rolle zugewandten Außenwand 34 des zweiten Schenkels 18 und der Rolle 12 selbst ein, so dass die Rolle 12 von der der Rolle 12 zugewandten Seite des Schenkels 18 leicht beabstandet ist und somit die Reibung bei der Drehung der Rolle 12 minimiert wird. Der zweite Sprengring 30 liegt an der Innenwand 36 des zweiten Schenkels 18 an, die der Rolle 12 abgewandt ist. Zwischen dem zweiten Sprengring 30 innerhalb des zweiten Schenkels 18 und der der Rolle zugewandten Außenwand 34 liegt die Schraubenfeder 32 ein. Die Schraubenfeder 32 kann dabei geringfügig in axialer Richtung komprimiert sein und spannt durch den Druck gegen den zweiten Spannring 30 die Drehachse 22 mitsamt der Rolle 12 in der Richtung der Seite der zweiten Schenkels 18 vor, die der Rolle 12 abgewandt ist. Hierdurch wird die Rolle 12 gegen den zweiten Schenkel 18 geringfügig angedrückt. Innerhalb des Lagers 20 ist die Drehachse 22 jedoch axial verschiebbar und kann gegen den Druck der Feder 32 geringfügig vom zweiten Schenkel 18 abgezogen werden. Diese Situation ist in Fig. 5 dargestellt.

Durch dieses Herausziehen gegen die Federspannung wird das freie Ende der Drehachse 22 in den zweiten Schenkel 18 eingezogen. In dieser Situation ist es möglich, die Rolleneinheit 10 an einem Kantenbereich einer Kiste 110 anzubringen, indem zunächst die Zapfen 24 in entsprechende Ausnehmungen 46 im Boden 48 der Kiste 110 eingesetzt werden, so dass der erste Schenkel 16 flach am Boden 48 anliegt. Dann liegt auch die zum Boden 48 senkrechte Seitenwand 50 der Kaste 110 am zweiten Schenkel 18 an, und die Drehachse 22 kann in eine entsprechend angeordnete Ausnehmung 52 in der Seitenwand 50 gleiten, wie in Fig. 16 durch einen Pfeil A dargestellt ist. Die in den Ausnehmungen 46 an der Unterseite der Kiste 110 einliegenden Zapfen 24 und das aus dem zweiten Schenkel 18 herausragende freie Ende der Drehachse 22, das in der Ausnehmung 52 in der Seitenwand 50 einliegt, halten die Rolleneinheit 10 fest an der Kante 54 der Kiste 110, die den Boden 48 von der Seitenwand 50 trennt. Auf diese Weise können beispielsweise vier Rolleneinheiten 10 an zwei gegenüberliegenden unteren Kanten 54 der Kiste 110 angebracht sein. Die Kiste 110 ist dann linear verschiebbar und kann in ihrer Spielfunktion beispielsweise ein Auto, einen Kinderwagen oder dergleichen repräsentieren.

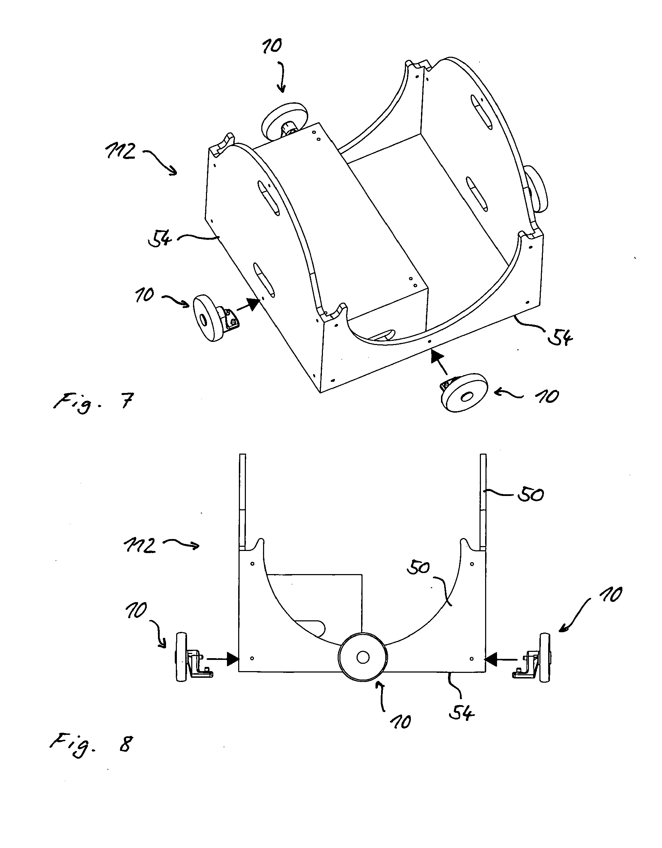

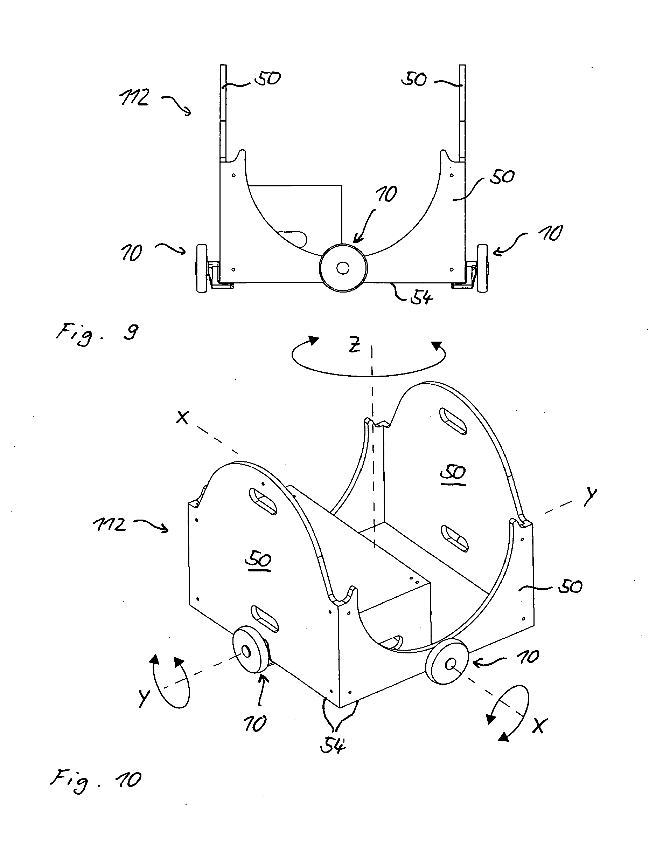

Die Kiste 110 kann an ihren Kantenbereichen mit einer größeren Anzahl von Ausnehmungen versehen sein, die es gestatten, Rolleneinheiten 10 an unterschiedlichen Stellen anzubringen. Beispielsweise zeigt Fig. 7 eine Anordnung von Rolleneinheiten 10 an einer Kistenhälfte 112 zur Bildung eines Karussells, bei welchem die Kistenhälfte 112 um eine senkrechte Achse Z (siehe Fig. 10) rotierbar ist, die senkrecht zum Untergrund steht. Hierbei wird jeweils eine Rolleneinheit 10 an der Mitte jeder unteren Außenkante 54 der Kistenhälfte 112 auf die Art und Weise angebracht, die in den Fig. 4 bis 6 beschrieben wurde. Jeweils zwei Rolleneinheiten 10 sind dann an gegenüberliegenden Kanten 54 derart angeordnet, dass deren Rollen 12 sich um eine gemeinsame Achse X,Y drehen (Fig. 10). Da die zwei Achsen X,Y der insgesamt vier Rollen 12 senkrecht zueinander stehen, ergibt sich die gewünschte Drehbarkeit um die dazu senkrechte Raumachse Z. Einzelheiten zur Anbringung der Rolleneinheiten 10 sind in den Fig. 8 und 9 dargestellt.

## Patentansprüche

1. Rolleneinheit (10) zur Anbringung an einer Kiste (110), inbesondere an einer Spielbox, **dadurch gekennzeichnet, dass** die Rolleneinheit (10) einen Lagerbock (14) umfasst, in welchem eine Rolle (12) drehbar gehalten wird und der einen etwa L-förmigen Querschnitt mit zwei Schenkeln (16,18) aufweist, von denen ein erster Schenkel (16) plattenförmig ausgebildet ist und zu der der Rolle (12) abgewandten Seite des Lagerbocks (14) weist und der zweite Schenkel (18) ein Lager (20) zur Aufnahme der Drehachse (22) der Rolle (12) umfasst, welche Drehachse (22) sich senkrecht zur Erstreckungsrichtung des zweiten Schenkels (18) durch diesen hindurch erstreckt und im Lager (20) axial verschiebbar einliegt, und welches Lager (20) ein Federelement (32) umfasst, das die Drehachse (22) in Richtung der der Rolle (12) abgewandten Seite des zweiten Schenkels (18) vorspannt.

2. Rolleneinheit nach Anspruch 1, **dadurch gekennzeichnet, dass** auf dem plattenförmigen ersten Schenkel (16) mindestens ein Zapfen (24) aufragt.

3. Kiste (110), inbesondere Spielbox, mit Rolleneinheiten (10) gemäß einem der vorhergehenden Ansprüche, die im Bereich der Außenkanten (54) des Kistenbodens (48) angebracht sind, wobei die Seitenwände (50) der Kiste (110) mit Ausnehmungen (52) zur Aufnahme der Enden der Drehachsen (22) versehen sind.

4. Kiste nach Anspruch 3 in Verbindung mit Anspruch 2, **dadurch gekennzeichnet, dass** der Kistenboden (48) mit Ausnehmungen (46) zur Aufnahme der Zapfen (24) versehen ist.
